**Europäisches Patentamt**

**European Patent Office**

**Office européen des brevets**

(19)

(11) Numéro de publication : **0 322 451 B1**

# (12) FASCICULE DE BREVET EUROPEEN

(45) Date de publication du fascicule du brevet :
**07.01.93 Bulletin 93/01**

(51) Int. Cl.$^5$ : **G02B 21/04,** G02B 17/00

(21) Numéro de dépôt : **88907003.3**

(22) Date de dépôt : **08.07.88**

(86) Numéro de dépôt international :
**PCT/FR88/00367**

(87) Numéro de publication internationale :
**WO 89/00709 26.01.89 Gazette 89/03**

(54) **DISPOSITIF OPTIQUE DE COLLECTION DE LUMIERE FORMANT OBJECTIF A MIROIR DE GRANDE OUVERTURE NUMERIQUE.**

(30) Priorité : **10.07.87 FR 8709883**

(43) Date de publication de la demande :
**05.07.89 Bulletin 89/27**

(45) Mention de la délivrance du brevet :
**07.01.93 Bulletin 93/01**

(84) Etats contractants désignés :
**DE FR GB NL**

(56) Documents cités :
**DE-B- 2 916 768**
**FR-A- 1 393 577**
**FR-A- 1 454 269**
**FR-A- 1 497 133**
**FR-A- 2 596 863**
**US-A- 4 084 887**
**US-A- 4 161 351**

(56) Documents cités :
**Optical Engineering, vol. 23, no. 2, March-April 1984, Society of Photo-Optical Instrumentation Engineers, (Bellingham,Washington, US), R.A. Paquin et al.: "Advanced lightwight beryllium optics", pp 157-158**

(73) Titulaire : **CENTRE NATIONAL DE LA RECHERCHE SCIENTIFIQUE**
**15, quai Anatole France**
**F-75007 Paris (FR)**

(72) Inventeur : **DELHAYE, Michel**
**80, rue Thiers**
**F-59650 Villeneuve-d'Ascq (FR)**
Inventeur : **TRUCHET, Michel**
**114, rue des Roux**
**F-94240 L'Hay-les-Roses (FR)**

(74) Mandataire : **Plaçais, Jean-Yves et al**
**Cabinet Netter, 40, rue Vignon**
**F-75009 Paris (FR)**

EP 0 322 451 B1

## Description

L'invention concerne la microscopie, notamment la microscopie analytique.

Dans ce domaine, il est toujours souhaitable de collecter le maximum de la lumière émise par l'objet, donc de disposer à cet effet d'une ouverture numérique élevée. Il faut encore que l'optique de collection travaille sur une gamme de longueurs d'onde aussi large que possible; idéalement, l'optique de collection devrait être achromatique de l'infrarouge à l'ultraviolet.

Dans un microscope, l'optique de collection est l'objectif. Les objectifs à lentilles actuels, même de qualité et de prix élevés, ne satisfont pas la double condition de grande ouverture numérique de collection et d'achromaticité sur une large bande.

Par ailleurs, dans la Demande de Brevet français N° 86 04947, le Demandeur a proposé de nouveaux dispositifs optiques. Ceux-ci permettent, en microanalyse, de mettre en oeuvre en même temps, sur un même échantillon, plusieurs techniques d'analyse : sonde électronique et/ou ionique, ou sonde laser, ou spectrométrie X et/ou optique, ou spectrométrie de masse, ou sonde Raman.

L'un de ces dispositifs optiques comprend deux miroirs définis chacun par une surface réfléchissante elliptique (plus exactement ellipsoïdale) concave, munie d'un orifice au sommet de son grand axe. Le montage proposé dans la Demande de Brevet antérieure (figure 6) est un agencement symétrique des deux miroirs. Le faisceau sonde (par exemple un faisceau d'électrons) entre dans le plan de symétrie, et l'objet disposé au centre de symétrie.

En poursuivant ses travaux, le Demandeur a découvert un nouvel objectif, permettant de résoudre le problème mentionné plus haut.

L'invention concerne donc un objectif à grande ouverture numérique, en particulier pour microscopie, comprenant en combinaison un premier miroir qui possède une surface réfléchissante ellipsoïdale concave, munie d'un orifice au sommet de son grand axe, un second miroir plan, perpendiculaire au grand axe de la surface réfléchissante ellipsoïdale, et disposé sensiblement au niveau du premier foyer de la surface ellipsoïdale sensiblement à égale distance entre ledit orifice, qui sert d'orifice de sortie, et le second foyer de la surface ellipsoïdale, un emplacement d'objet disposé sensiblement au niveau du premier foyer de celle-ci, la lumière de sortie émanant du premier foyer de la surface ellipsoïdale étant réfléchie sur le premier miroir puis sur le second miroir et convergeant enfin au niveau de l'orifice et la pupille de l'objectif étant définie par le bord libre de grand diamètre du premier miroir qui avoisine le second miroir.

Selon un autre aspect de l'invention, un porte-objet est monté dans le miroir plan, au niveau de son intersection avec le grand axe de la surface réfléchissante ellipsoïdale du premier miroir. On obtient ainsi un montage très simple qui permet l'ajustement automatique de mise au point. Pour cela, il suffit par exemple que le corps portant le second miroir soit muni de moyens de déplacement fins, lesquels servent donc en même temps au déplacement du porte-objet.

Pour certaines applications, il est utile que l'orifice de sortie de l'objectif selon la présente invention soit couplé à au moins un autre objectif. Cet autre objectif peut, avantageusement, être construit comme le premier.

Par ailleurs, les miroirs peuvent être usinés dans un bloc d'un métal, tel que l'aluminium très pur, poli optiquement. Ils peuvent également être en béryllium très pur. Ils peuvent encore être réalisés par revêtement multidiélectrique d'un substrat adéquat.

Pour l'application en microanalyse, notamment, le corps définissant le premier miroir est avantageusement traversé par des alésages. Ceux-ci permettent le passage de faisceaux d'excitation (sonde électronique, ionique ou laser) et/ou de faisceaux émis par l'échantillon pour la spectrométrie à rayons X ou optiques, la spectrométrie de masse, ou l'analyse Raman.

En microscopie optique traditionnelle, l'éclairage de l'objet peut être effectué par l'arrière, le porte-objet étant alors transparent.

D'autres caractéristiques et avantages de l'invention apparaîtront à l'examen de la description détaillée ci-après, et des dessins annexés, sur lesquels :
- la figure 1 est un schéma de principe d'un dispositif optique élémentaire selon la présente invention;
- la figure 2 est une figure précisant le fonctionnement du dispositif de la figure 1;
- la figure 3 est un dispositif optique plus complet associant à l'objectif à miroir un objectif à lentille classique; et
- la figure 4 illustre un dispositif associant en cascade deux objectifs à miroir selon l'invention.

Les dessins annexés comportent des éléments, notamment géométriques, de caractère certain. En conséquence, ils pourront non seulement servir à mieux faire comprendre la description détaillée ci-après, mais aussi contribuer à la définition de l'invention, le cas échéant.

Dans un objectif, on notera ici v l'ouverture angulaire d'entrée et u l'ouverture angulaire de sortie. Si n désigne l'indice de réfraction du milieu de propagation optique, l'ouverture numérique d'entrée est égale au produit n.sin v.

Les limitations de l'ouverture numérique d'entrée sont généralement dues aux aberrations. Pour les systèmes à lentilles, la limite correspond à un angle v d'environ 72°, pour une ouverture numérique de 0,95; la largeur de bande spectrale est par ailleurs relativement réduite. Pour les objectifs à miroirs connus, du type Cassegrain-Schwarzschild, l'angle v vaut environ 40°, pour une ouverture numérique de 0,65. On peut observer qu'un miroir ellipsoïdal permet d'atteindre un angle solide de collection beaucoup plus élevé; mais le faisceau de sortie possède également un angle d'ouverture très élevé, incompatible avec le couplage du collecteur de lumière avec un instrument d'analyse spectrale, tel qu'un monochromateur ou un interféromètre. Est à prendre en compte également la présence d'un porte-objet, en coopération avec un tel miroir. Il en découle une perte sur le faisceau optique utile.

Le Demandeur a observé que, pour concilier un angle solide de collection élevé, avec un faisceau de sortie d'ouverture réduite, il est souhaitable de combiner deux miroirs.

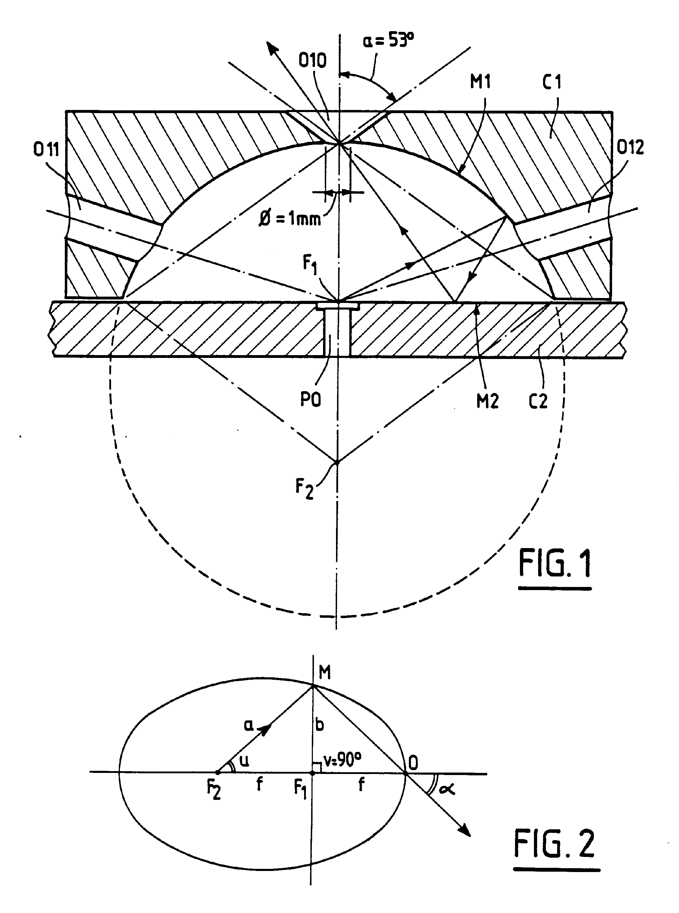

La figure 1 illustre une réalisation de ce genre qui est particulièrement avantageuse.

Le premier miroir est défini par un corps ou substrat C1, dont la paroi intérieure M1 forme une surface réfléchissante elliptique. Les deux foyers de l'ellipse sont notés $F_1$ et $F_2$. Au sommet, sur le grand axe $F_1$-$F_2$ de l'ellipse, on prévoit un orifice O10, évasé vers l'extérieur de façon à correspondre à l'angle d'ouverture de sortie, qui est ici égal à environ 53° (valeur donnée à titre d'exemple préférentiel).

Le second miroir, porté par un corps C2, est défini par une surface réfléchissante plane M2 de celui-ci. Le miroir M2 est en principe perpendiculaire au grand axe $F_1$-$F_2$ (si l'orifice de sortie est placé au sommet O du corps C1; il pourrait en être autrement dans d'autres réalisations).

L'objet (non représenté) est placé au foyer $F_1$ du miroir ellipsoïdal M1. Ce miroir en formerait donc une image en $F_2$. L'image en $F_2$ est reportée par le miroir M2 au niveau de l'orifice de sortie O10 du miroir M1.

L'intérêt majeur de cette disposition est qu'aucun réglage fin du second miroir M2 n'est requis, car il suffit simplement qu'il soit sensiblement perpendiculaire au grand axe $F_1$-$F_2$ du miroir ellipsoïdal M1.

Dans le cas général de l'invention, le miroir M2 ne passe pas nécessairement par le foyer $F_1$. On peut choisir à volonté les paramètres $OF_1$ et $F_1 F_2$ définissant le miroir ellipsoïdal M1. Cependant, il convient de ne pas s'éloigner trop d'une sphère, car le champ objet utile devient alors très petit.

Les conditions exprimées jusqu'à présent n'exigent pas que le miroir M2 soit placé en $F_1$ mais simplement qu'il soit placé au milieu du segment $OF_2$ pour que l'image coïncide avec l'orifice de sortie O10. Cependant, l'existence d'une image virtuelle de l'objet (donnée par le miroir plan) qui ne coïncide pas avec le foyer $F_1$ engendre une lumière parasite gênante.

En pratique, l'objet lui-même, ainsi que son support, limitent l'accès à un demi-espace (180°). Le Demandeur a observé que ceci rend dans la plupart des cas inutile la recherche d'une ouverture numérique supérieure à 1, ce qui correspond à un angle solide de collection de 2 pi stéradians.

Dans ces conditions, la configuration la plus intéressante de l'invention, pour une ouverture numérique de collection unité (soit v = 90°), est donc limitée par un plan perpendiculaire à l'axe et contenant le foyer $F_1$, comme visible sur la figure 1. Les distances $OF_1$ et $F_1F_2$ sont alors égales, ce qui fixe l'excentricité de l'ellipsoïde.

Il convient donc de placer le miroir M2 au voisinage du foyer $F_1$. On observera que le miroir ellipsoïdal M1 reste ici assez proche de la sphère pour conserver un champ objet utile satisfaisant.

Des avantages pratiques intéressants en découlent, car l'objet peut être placé à l'intersection du miroir plan M2 avec l'axe $F_1$-$F_2$, dans un alvéole de section circulaire, avec pour porte-objet PO une grille support, par exemple du type couramment employé en microscopie électronique. Dès lors que l'objet est petit, l'obturation centrale qui en résulte (pour les faisceaux lumineux utiles) est pratiquement négligeable.

De plus, le miroir plan M2 peut faire partie du porte-objet, qui est alors réglable selon un positionnement à trois dimensions. En effet, on peut admettre une tolérance assez large quant au report de l'image au voisinage du point O par le miroir plan.

Dans un mode de réalisation particulier de l'invention, la hauteur du corps C1 est de 8,5 mm. Son diamètre est de 25 mm. Le diamètre de l'orifice O10 est de 0,5 mm. La distance entre les parties voisines du corps C1 et du corps C2 est de 0,25 mm. Enfin, la distance $OF_1$ est de 7,5 mm.

Il est maintenant fait référence à la figure 2, pour la détermination de l'ouverture numérique de sortie, dans le mode de réalisation préférentiel où le miroir M2 passe par le foyer $F_1$. La distance focale est maintenant notée f. Si M est le point situé à l'intersection (fictive) des surfaces réfléchissantes M1 et M2, on note a et b ses distances aux foyers $F_2$ et $F_1$. Conformément aux propriétés de l'ellipse, la somme a+b est égale à 3.f. De plus, pour le point M, on observera sur la figure 2 que $MF_1$ est perpendiculaire à $F_1$-$F_2$. De cela, on peut déduire les deux relations suivantes :

$$a = 3.f - b$$
$$a^2 = f^2 + b^2$$

Il en découle que a est égal à 5/3 f et que b est égal à 4/3 f.

L'angle de sortie u possède alors un sinus égal à 0,8, ce qui correspond à un angle de 53°13, proche des 53° déjà indiqués.

Ainsi, pour une ouverture numérique d'entrée ou de collection égale à l'unité, on obtient une ouverture numérique de sortie égale à 0,8 dans l'air ou dans le vide.

L'objectif ainsi obtenu selon l'invention peut donc facilement se coupler à des objectifs existants à lentilles, possédant une ouverture numérique d'entrée égale à 0,8. De tels objectifs existent actuellement dans le commerce, mais ne sont corrigés que pour une gamme spectrale réduite.

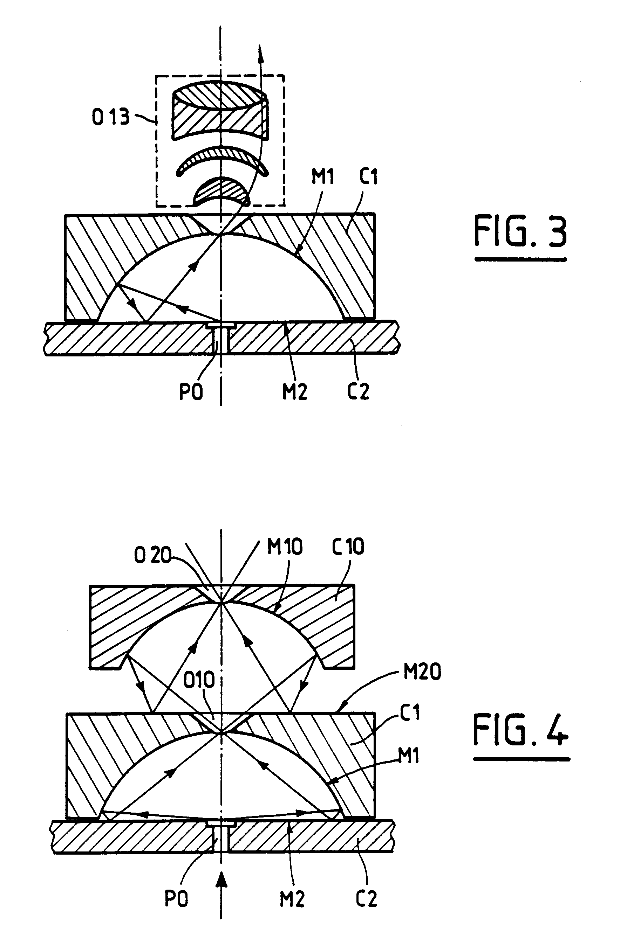

Ainsi, la figure 3 illustre schématiquement le couplage d'un premier objectif selon la présente invention avec un objectif de microscope classique O13 d'ouverture numérique 0,8.

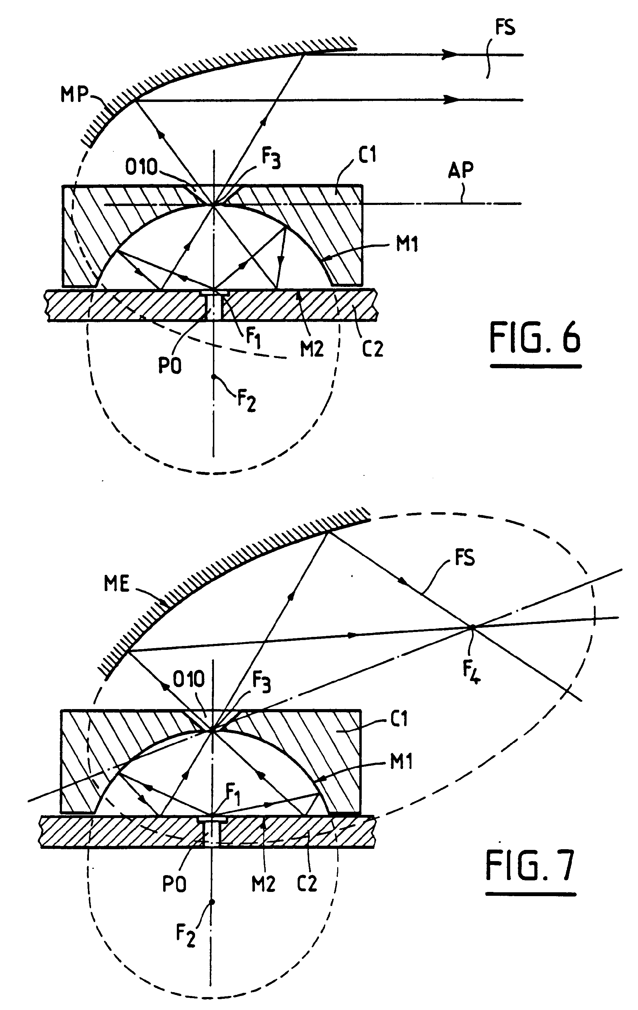

Pour conserver l'achromaticité, il est préférable de coupler l'objectif selon l'invention à des optiques à miroirs, par exemple ellipsoïdes hors l'axe, ou paraboliques hors l'axe si on désire un faisceau de sortie parallèle (figures 7 et 6, respectivement, décrites plus loin).

Une variante intéressante est illustrée sur la figure 4. Elle consiste à mettre en oeuvre, en cascade, deux objectifs (ou plus) selon la présente invention.

Le premier objectif est le même que précédemment, sauf que la face supérieure du corps C1, plane, est à nouveau munie d'une surface réfléchissante M20. Cette surface réfléchissante M20 coopère avec un second miroir ellipsoïdal M10 ménagé dans un corps C10, muni en partie supérieure d'une ouverture O20.

Si ce second miroir M10 a les mêmes caractéristiques que M1, l'ouverture numérique du faisceau sortant par l'orifice O20 est de 0,47, ce qui correspond à un demi-angle de 28°. Une telle ouverture est compatible avec le couplage à un troisième objectif à miroirs sphériques de type Cassegrain-Schwarzschild existant dans le commerce; il est également compatible avec un miroir ellipsoïdal ou parabolique.

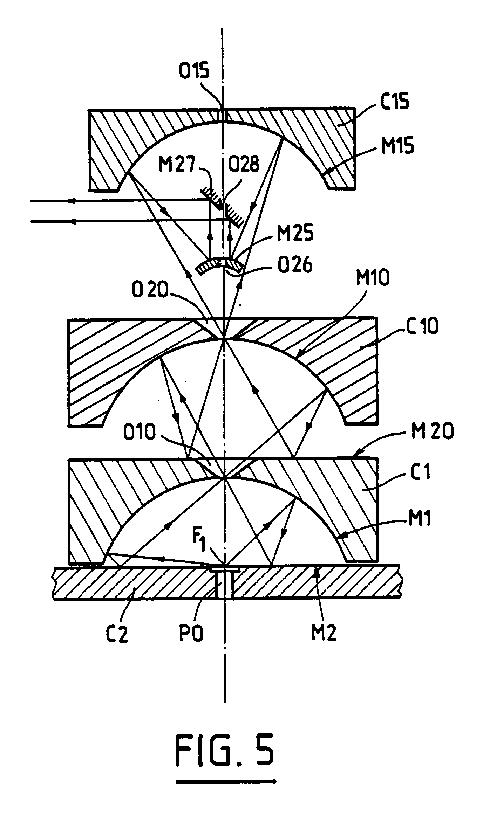

La figure 5 concerne un montage en cascade de deux objectifs selon l'invention et d'un objectif selon Cassegrain-Schwarzschild, le tout entièrement à miroirs, donc achromatique de l'ultraviolet à l'infrarouge, et passant d'une ouverture numérique 1 à un faisceau parallèle. Sa partie basse est identique à la figure 4. La lumière issue de l'orifice O20 est reçue par le miroir M15, en général sphérique, creusé dans un corps C15.

Le miroir M25 (sphérique pour une ouverture numérique de 0,47) renvoie la lumière vers l'orifice de sortie O15. Un autre miroir M27, plan, incliné à 45°, peut être utilisé pour un renvoi latéral de lumière.

Les miroirs M25 et M27 sont percés sur l'axe O20-O15. Il est rappelé que le cône d'ombre optique nécessairement dû au miroir M25 peut être utilisé pour faire passer un faisceau d'électrons, dans l'application à la microsonde électronique.

Le montage de la figure 5 fournit un système optique achromatique de l'ultraviolet à l'infrarouge, passant d'une ouverture numérique unité à un faisceau parallèle.

La figure 6 illustre une autre manière d'obtenir un faisceau parallèle en sortie d'un (ou plusieurs) objectif selon l'invention (tel celui de la figure 1).

La lumière issue de l'orifice O10 est recueillie par un miroir MP, constitué d'une portion de paraboloïde de révolution dont le foyer $F_3$ est confondu avec le sommet O (figure 1) de l'ellipsoïde associé au miroir M1. Pour un renvoi à 90°, l'axe AP du paraboloïde est parallèle au miroir M2. Le faisceau de sortie FS est parallèle.

La figure 7 illustre une autre variante où le miroir de sortie est une portion d'ellipsoïde ME dont un foyer $F_3$ est en O. Le faisceau de sortie FS converge en son autre foyer $F_4$. Pour certaines applications, les deux foyers $F_3$ et $F_4$ peuvent être sur l'axe $F_1$-$F_2$, le miroir ME étant alors un ellipsoïde doublement tronqué (ou une surface asymétrique semblable à un ellipsoïde, en forme d'oeuf par exemple). La même remarque quant à l'axe vaut pour le paraboloïde de la figure 6.

L'homme de l'art comprendra que l'un des avantages essentiels des objectifs selon la présente invention est la possibilité de les réaliser, à caractéristiques optiques comparables, à un prix nettement inférieur, tandis que leur structure à miroirs permet très aisément, et sans aberration, un fonctionnement sur l'ensemble du spectre optique, de l'infrarouge à l'ultraviolet. Aucun objectif à lentilles actuel ne possède ces propriétés.

Les miroirs peuvent être obtenus par exemple par usinage direct, automatique ("taille") d'un bloc métallique (aluminium très pur par exemple, ou encore béryllium très pur). Une variante consiste à rapporter un revêtement métallique ou multidiélectrique pour définir la surface réfléchissante. Cette variante pourrait encore s'appliquer au cas où les corps C1 et/ou C2 seraient en verre ou en matière synthétique, engendrés par taille ou par moulage.

Quoique les objectifs selon la présente invention soient conçus pour la microscopie analytique, ils peuvent trouver des applications très intéressantes en microscopie photonique, notamment en ultraviolet et infrarouge.

Quant aux applications en microscopie analytique, le contenu descriptif de la Demande de Brevet 86 04 947 est à considérer comme incorporé à la présente description.

On notera que, mieux encore que ceux précédemment décrits, l'objectif de l'invention se loge très aisément dans l'espace prévu entre la lentille et le porte-échantillon, au sein d'un microscope et/ou d'une microsonde électronique.

Un objectif selon l'invention est logé entre le porte-échantillon et les pièces polaires du dernier condenseur magnétique. Le passage dans l'orifice des pièces polaires peut se faire à l'aide du second objectif selon l'invention (figure 5), qui montre également l'optique de Cassegrain habituelle d'une microsonde électronique. Le passage des pièces polaires peut également se faire à l'aide du paraboloïde ou de l'ellipsoïde des figures 6 et 7, doublement tronqué et monté coaxialement.

C'est dans ces conditions que l'objectif de l'invention peut s'appliquer au procédé de microanalyse rappelé plus haut, de la manière décrite en détail dans la Demande de Brevet antérieure N° 86 04 947.

Les orifices axiaux et latéraux O10, O11 et O12 percés dans le corps C1 du miroir primaire M1 (figure 1) peuvent servir au passage du faisceau sonde et des faisceaux d'analyse qui peuvent être un faisceau laser, un faisceau de rayons X, un faisceau de particules, d'électrons, ou encore d'ions.

Dans le cas d'une utilisation en microscopie photonique, il conviendra naturellement d'incorporer l'objectif selon l'invention à un petit barillet muni d'un filetage standard de microscope, la chose étant aisée compte tenu de sa petite taille. Les orifices latéraux O11 et O12 sont alors inutiles.

L'objectif de l'invention est également intéressant pour des cryostats à basse température, où un écran thermique est nécessaire. Il assure très bien cette fonction, de par sa constitution métallique.

## Revendications

1. Objectif à grande ouverture numérique, en particulier pour microscope, caractérisé en ce qu'il comprend, en combinaison, un premier miroir (M1) qui possède une surface réfléchissante ellipsoïdale concave, munie d'un orifice (O10) au sommet de son grand axe, et un second miroir plan (M2), perpendiculaire au grand axe de la surface réfléchissante ellipsoïdale et disposé sensiblement au niveau du premier foyer (F1) de la surface ellipsoïdale sensiblement à égale distance entre ledit orifice (O10) et le second foyer (F2) de la surface ellipsoïdale, un emplacement d'objet disposé sensiblement au niveau du premier foyer (F1) de ladite surface ellipsoïdale, la lumière de sortie émanant du premier foyer (F1) de la surface ellipsoïdale étant réfléchie sur le premier miroir (M1) puis sur le second miroir (M2) et convergeant enfin au niveau de l'orifice (O10), et la pupille de l'objectif étant définie par le bord libre de grand diamètre de la surface ellipsoïdale, qui avoisine le second miroir.

2. Dispositif selon la revendication 1, caractérisé en ce qu'un porte-objet (PO) est monté dans le miroir plan, au niveau de son intersection avec l'axe de la surface réfléchissante ellipsoïdale.

3. Dispositif selon la revendication 2, caractérisé en ce qu'un corps (C2) portant le second miroir est muni de moyens de déplacement fin, servant en même temps au déplacement du porte-objet.

4. Dispositif selon l'une des revendications précédentes, caractérisé par une ouverture numérique proche de 1 à l'entrée, et de 0,8 en sortie.

5. Dispositif selon l'une des revendications précédentes, caractérisé en ce que le faisceau sortant par l'orifice (O10) est couplé à au moins un autre système optique ou objectif.

6. Dispositif selon la revendication 5, caractérisé en ce que cet autre objectif est construit comme le premier.

7. Dispositif selon l'une des revendications 5 et 6, caractérisé en ce que l'orifice de sortie est couplé à une portion de miroir sensiblement ellipsoïdal.

8. Dispositif selon l'une des revendications 5 et 6, caractérisé en ce que l'orifice de sortie est couplé à un objectif de Cassegrain ou à une portion de miroir parabolique, ce qui fournit un faisceau de sortie parallèle.

9. Dispositif selon l'une des revendications précédentes, caractérisé en ce que les miroirs (M1, M2) sont usinés dans un bloc d'un métal, tel que l'aluminium très pur.

10. Dispositif selon la revendication 9, caractérisé en ce que les miroirs (M1, M2) sont en béryllium très pur.

11. Dispositif selon l'une des revendications précédentes, caractérisé en ce que les miroirs (M1, M2) sont réalisés par revêtement multidiélectrique ou métallisation d'un substrat.

12. Dispositif selon l'une des revendications précédentes, caractérisé en ce que le corps (C1) définissant le premier miroir est traversé par des alésages permettant le passage de faisceaux-sonde et de faisceaux d'analyse, électronique, ionique, laser, et/ou pour la spectrométrie à rayons X ou optique, la spectrométrie de masse ou l'analyse Raman.

## Patentansprüche

1. Objektiv mit großer numerischer Apertur, vor allem für Mikroskope,
dadurch **gekennzeichnet,**
daß es enthält, in Kombination, einen ersten Spiegel (M1), der eine ellipsoidisch konkave reflektierende Fläche aufweist, versehen mit einer Öffnung (O10) im Scheitelpunkt seiner Hauptachse, und einen zweiten, planen Spiegel (M2), rechtwinklig zur Hauptachse der ellipsoidischen reflektierenden Fläche und angebracht im wesentlichen auf gleicher Höhe mit dem ersten Brennpunkt (F1) der ellipsoidischen Fläche mit im wesentlichen gleichem Abstand zwischen der genannten Öffnung (O10) und dem zweiten Brennpunkt (F2) der ellipsoidischen Fläche, einen im wesentlichen auf gleicher Höhe mit dem ersten Brennpunkt (F1) der genannten ellipsoidischen Fläche angeordneten Objektstandort, wobei das Austrittslicht ausgehend vom ersten Brennpunkt (F1) der ellipsoidischen Fläche reflektiert wird auf dem ersten Spiegel (M1), dann auf dem zweiten Spiegel (M2) und schließlich konvergiert in der Höhe der Öffnung (O10), und dabei die Objektivblende definiert wird vom freien, dem zweiten Spiegel benachbarten Hauptdurchmesserrand der ellipsoidischen Fläche.

2. Vorrichtung nach Anspruch 1, dadurch gekennzeichnet, daß im planen Spiegel ein Objektträger (PO) montiert ist auf dem Niveau seines Schnittpunkts mit der reflektierenden ellipsoidischen Fläche.

3. Vorrichtung nach Anspruch 2, dadurch gekennzeichnet, daß ein den zweiten Spiegel tragender Körper (C2) mit Mitteln zur Feinverstellung versehen ist, die gleichzeitig der Verschiebung des Objektträgers dienen.

4. Vorrichtung nach einem der vorhergehenden Ansprüche, gekennzeichnet durch eine numerische Apertur von nahe 1 am Eingang und von 0,8 im Ausgang.

5. Vorrichtung nach einem der vorhergehenden Ansprüche, dadurch gekennzeichnet, daß der aus der Öffnung (O10) austretende Strahl gekoppelt ist mit mindestens einem anderen optischen System oder Objektiv.

6. Vorrichtung nach Anspruch 5, dadurch gekennzeichnet, daß dieses andere Objektiv konstruiert ist wie das erste.

7. Vorrichtung nach einem der Ansprüche 5 und 6, dadurch gekennzeichnet, daß die Austrittsöffnung gekoppelt ist mit einem im wesentlichen ellipsoidischen Spiegelteil.

8. Vorrichtung nach einem der Ansprüche 5 und 6, dadurch gekennzeichnet, daß die Austrittsöffnung gekoppelt ist mit einem Cassegrain-Objektiv oder mit einem parabolischen Spiegelteil, was ein paralleles Austrittsbündel ergibt.

9. Vorrichtung nach einem der vorhergehenden Ansprüche, dadurch gekennzeichnet, daß die Spiegel (M1, M2) aus einem einem Block eines Metalls gefertigt sind, wie etwa hochreinem Aluminium.

10. Vorrichtung nach Anspruch 9, dadurch gekennzeichnet, daß die Spiegel (M1, M2) aus hochreinem Beryllium sind.

11. Vorrichtung nach einem der vorhergehenden Ansprüche, dadurch gekennzeichnet, daß die Spiegel (M1, M2) hergestellt werden durch multidielektrische Beschichtung oder Metallisierung eines Substrats.

12. Vorrichtung nach einem der vorhergehenden Ansprüche, dadurch gekennzeichnet, daß der den ersten Spiegel definierende Körper (C1) von Bohrungen durchquert wird, welche die Passage von elektronischen, ionischen, Laser -Sondenstrahlen und -Analysestrahlen zulassen, und /oder für die Spektrometrie mit Röntgen- oder optischen Strahlen, die Massenspektrometrie oder die Raman-Analyse.

## Claims

1. Objective lens with wide numerical aperture, in particular for a microscope, characterised in that it contains, in combination, a first mirror (M1) which has a concave, ellipsoidal reflecting surface, provided with an aperture (010) at the apex of its major axis, and a second plane mirror (M2) perpendicular to the major axis of the ellipsoidal reflecting surface and positioned approximately at the first focal point (F1) of the ellipsoidal surface, approximately equidistant between the said aperture (010) and the second focal point (F2) of the ellipsoidal surface, an object location placed approximately at the first focal point (F1) of the said ellipsoidal surface, the emergent light emanating from the first focal point (F1) of the ellipsoidal surface being reflected onto the first mirror (M1) then onto the second mirror (M2) and finally converging at the aperture (010), and the pupil of the objective lens being defined by the free edge of the major diameter of the ellipsoidal surface, which is adjacent to the second mirror.

2. Device according to claim 1, characterised in that a microscope stage (PO) is mounted in the plane mirror at its intersection with the axis of the ellipsoidal reflecting surface.

3. Device according to claim 2, characterised in that a body (C2) supporting the second mirror is provided with precision displacement means used simultaneously for moving the microscope stage.

4. Device according to one of the preceding claims, characterised by a numerical aperture approaching 1 at the entrance and 0.8 at the exit.

5. Device according to one of the preceding claims, characterised in that the beam leaving by the aperture (010) is coupled to at least one other optical system or objective lens.

6. Device according to claim 1, characterised in that this other objective lens is constructed like the first one.

7. Device according to one of the claims 5 and 6, characterised in that the exit aperture is coupled to a section of the mirror that is approximately ellipsoidal.

8. Device according to one of the claims 5 and 6, characterised in that the exit aperture is coupled to a Cassegrain objective lens or to a section of a parabolic mirror, that provides a parallel exit beam.

9. Device according to one of the preceding claims, characterised in that the mirrors (M1, M2) are machined in a block of metal, such as very pure aluminium.

10. Device according to claim 9, characterised in that the mirrors (M1, M2) are made of very pure beryllium.

11. Device according to one of the preceding claims, characterised in that the mirrors (M1, M2) are produced by means of a multi-dielectric coating or by metallization of a substrate.

12. Device according to one of the preceding claims characterised in that the body (C1) defining the first mirror is pierced by bores enabling detector beams and analytical, electronic, ion, laser beams to pass and/or for X-ray or optical spectrometry, mass spectrometry or Raman analysis.

FIG. 1

FIG. 2

FIG. 3

FIG. 4

FIG. 5

FIG. 6

FIG. 7